Europäisches Patentamt

European Patent Office

Office européen des brevets

(11) Veröffentlichungsnummer: **0 459 273 A1**

# (12) EUROPÄISCHE PATENTANMELDUNG

(21) Anmeldenummer: **91108188.3**

(22) Anmeldetag: **21.05.91**

(51) Int. Cl.5: **F16D 25/14**

(30) Priorität: **23.05.90 HU 314590**

(43) Veröffentlichungstag der Anmeldung:
**04.12.91 Patentblatt 91/49**

(84) Benannte Vertragsstaaten:
**AT DE FR GB**

(71) Anmelder: **Csepel Autogyár**
**Pf. 38**
**H-2311 Szigetszentmiklos(HU)**

(72) Erfinder: **Rácz, R bert, Dipl.-Ing.**
**Béke u. 1**
**H-3184 Mlhálygerge(HU)**

Erfinder: **Simonyi, Sándor, Dr. Dipl.-Ing.**
**Pet fi u. 59**
**H-3102 Salg tarján, Baglyasalja(HU)**
Erfinder: **Alvégi, Laszl**
**Gagarin u. 16**
**H-3104 Salg tarján(HU)**
Erfinder: **Töröcsik, Laszl , Dipl.-Ing.**
**Kakukk u. 10/b**
**H-1126 Budapest(HU)**

(74) Vertreter: **Patentanwälte Viering & Jentschura**
**Steinsdorfstrasse 6 Postfach 22 14 43**
**W-8000 München 22(DE)**

(54) **Steuerung einer pneumatisch betätigten Reibungskupplung eines Kraftfahrzeuges.**

(57) Steuerung einer pneumatisch betätigten Reibungskupplung eines Kraftfahrzeugs, mit einem pneumatischen Arbeitszylinder (2), von dessen Kolben (3) die Reibungskupplung (1) betätigt wird und dessen Arbeitsraum wahlweise über ein elektropneumatisches Füllventil (5) mit einer pneumatischen Druckquelle, oder über ein elektropneumatisches Entlüftungsventil (4) mit der Umgebung verbindbar ist, wobei die Ventile in Abhängigkeit von der Stellung einer Kupplungsbetätigungsvorrichtung (12), insbesondere eines Kupplungspedals, gesteuert sind. Die Durchsätze des Füllventils (5) und des Entlüftungsventils (4), die impulsbetrieben sind, sind durch Impulsbreitenmodulation proportional zu der Differenz aus dem Wert eines die Stellung der Kupplungsbetätigungsvorrichtung (12) angebenden Sollwertsignals für die Stellung des Kolbens (3) des Arbeitszylinders (2) und dem Wert eines die Ist-Stellung des Kolbens (3) angebenden Istwertsignals gesteuert.

Fig. 1

Die Erfindung betrifft eine Steuerung einer pneumatisch betätigten Reibungskupplung eines Kraftfahrzeugs mit einem elektropneumatisch gesteuerten pneumatischen Arbeitszylinder.

Ziel der Entwicklung war es insbesondere, eine solche Ausführungeinheit zu schaffen, mit deren Hilfe die Kupplung mit elektrischen Signalen niedrigen Niveaus über alle Kupplungsstellungen hin beliebig gesteuert werden kann.

Die erfindungsgemäße Steuerung einer pneumatisch betätigten Reibungskupplung eines Kraftfahrzeugs, mit einem pneumatischen Arbeitszylinder, von dessen Kolben die Reibungskupplung betätigt wird und dessen Arbeitsraum wahlweise über ein elektropneumatisches Füllventil mit einer pneumatischen Druckquelle, oder über ein elektropneumatisches Entlüftungsventil mit der Umgebung verbindbar ist, wobei die Ventile in Abhängigkeit von der Stellung einer Kupplungsbetätigungsvorrichtung, insbesondere eines Kupplungspedals, gesteuert sind, zeichnet sich dadurch aus, daß das Füllventil und das Entlüftungsventil in ihren Durchsätzen proportional zu der Differenz aus dem Wert eines die Stellung der Kupplungsbetätigungsvorrichtung angebenden Sollwertsignals für die Stellung des Kolbens des Arbeitszylinders und dem Wert eines die Ist-Stellung des Kolbens angebenden Istwertsignals gesteuert sind.

Bei der erfindungsgemäßen Steuerung werden die den Sollwert für die Stellung des Kolbens des Arbeitszylinders und daher die die zugeordnete Einrückstellung der Kupplung angebende Stellung der Kupplungsbetätigungsvorrichtung und die jeweilige Iststellung des Kolbens ständig abgetastet und die Differenz aus dem Sollwertsignal und dem Istwertsignal ständig erzeugt, so daß je nach dem Vorzeichen der Differenz das Füllventil oder das Entlüftungsventil ständig nachgesteuert werden. Sobald die Differenz Null wird, sind beide Ventile geschlossen, so daß die Kupplung in der dabei erreichten Einrückstellung gehalten wird.

Die Kupplungsbetätigungsvorrichtung kann ein Kupplungspedal sein. Jedoch ist es auch möglich, die erfindungsgemäße Steuerung mit einem anderen Stellglied als Kupplungsbetätigungsvorrichtung anzuwenden, wie einem manuell, halbautomatisch oder vollautomatisch betätigten Kupplungsbetätigungsglied.

Wenngleich außerdem dem Fachmann für die differenzproportionale Steuerung der elektropneumatischen Ventile auch andere Ausführungsmöglichkeiten zur Verfügung stehen, wird erfindungsgemäß eine Ausführungsform bevorzugt, bei welcher das Füllventil und das Entlüftungsventil impulsbetrieben sind und mittels in ihrer Impulsbreite proportional zu dem jeweiligen Wert der Differenz aus dem Sollwertsignal und dem Istwertsignal modulierten Steuerimpulsen konstanter Impulsfrequenz gesteuert sind.

Vorzugsweise wird für das Steuern der Ventile auch der Verschleiß der Reibbeläge der Kupplung berücksichtigt, indem mittels des die Kolbenstellung abtastenden Fühlers oder eines gesonderten Fühlers die in Abhängigkeit vom Verschleiß der Reibbeläge veränderliche vollständige Einrückstellung der Kupplung abtastbar ist und der Wert des zu dieser jeweiligen vollständigen Einrückstellung gehörenden Signals zur Korrektur des Sollwertsignals für den jeweils nächstfolgenden Steuervorgang speicherbar ist.

Die kennzeichnenden Vorteile der erfindungsgemäßen elektropneumatischen Kupplungssteuerung sind daher in der bevorzugten Ausführungsform wie folgt: Die Kupplung kann mit beliebiger Geschwindigkeit ausgerückt und eingerückt werden. Die Kupplung kann in sämtlichen Einrückstellungen gehalten werden, um beispielsweise das angehaltene Fahrzeug an Steigungen ohne Betätigung der Bremse durch Schleifenlassen der Kupplung zu halten. Der Verschleiß der Reibbeläge wird für die Steuerung selbsttätig berücksichtigt; der Verschleißgrad der Reibbeläge kann einfach und schnell festgestellt werden. Der Aufbau der Steuerung ist einfach und der Betrieb ist zuverlässig.

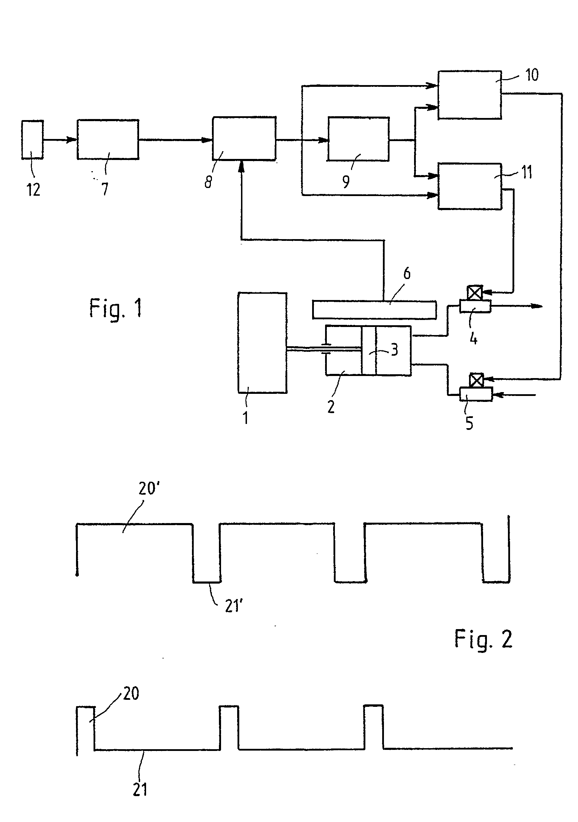

Die Erfindung wird im folgenden unter Bezugnahme auf die Zeichnung erläutert, in welcher Fig. 1 ein Blockschema der erfindungsgemäßen Steuerung, und Fig. 2 die Signalform der impulsbreitenmodulierten Steuersignale zeigen.

Gemäß Fig. 1 weist die elektronische Steuerung der Kupplung 1, die von dem Kolben 3 eines pneumatischen Arbeitszylinders 2 betätigt wird, der über ein Füllventil 5 an eine Druckluftquelle, und über ein Entlüftungsventil 4 an den Umgebungsluftraum anschließbar ist, einen die Stellung der Kupplungsbetätigungsvorrichtung 12 abtastenden Kupplungsbetätigungsgeber 7, einen die Einrückstellung der Kupplung 1 anhand der Stellung des Kolbens 3 abtastenden Kupplungsstellungsgeber 6, einen die Differenz der Werte des vom Kupplungsbetätigungsgeber 7 abgegebenen Sollwertsignals und des vom Kupplungsstellungsgeber 6 abgegebenen Istwertsignals vorzeichenabhängig bildenden Differenzbildner 8 und einen die von diesem abgegebenen Signale in Impulssignale mit konstanter Impulsfrequenz, jedoch mit proportional zu dem jeweiligen Wert der Differenz modulierter Impulsbreite umwandelnden Impulsbreitenmodulator 9 auf. Die Ausgangssignale des Impulsbreitenmodulators 9 werden an den einen Eingang einer Füllventilsteuereinheit 10 und einer Entlüftungsventilsteuereinheit 11 gegeben, die alternativ je nach dem Vorzeichen der Sollwert-Istwert-Differenz mittels eines entsprechenden Enable-Signals zur Steuerung des Füllventils 5 bzw. des Entlüftungsventils 4 aktiviert werden.

Das Füllen des pneumatischen Arbeitszylinders 2 hat das Ausrücken der Kupplung 1 entgegen der Kraft der Kupplungsfeder zur Folge, während das Entlüften des Arbeitszylinders 2 das Einrücken der Kupplung 1 unter der Kraft der Kupplungsfeder zur Folge hat. Das Wesen des Betriebs ist es, daß mit Hilfe der elektronischen Steuerung der Ventile 4, 5 ein veränderbarer Durchsatz durch die Ventile hindurch verwirklicht wird. Dies bedeutet, daß ein Kupplungseinrücken und Kupplungsausrücken mit beliebiger Geschwindigkeit erreicht werden kann. Die elektronische Regelung erfolgt derart, daß die Ventile 4, 5 mit impulsbreitenmoduliertem Signal mit konstanter Frequenz betätigt werden. Im Falle des Impulstaktverhältnisses von 0% ist das Ventil geschlossen, im Falle eines kleinen Impulstaktverhältnisses, wie in Fig. 2 durch die obere Impulsfolge gezeigt, ist das Ventil für kurzzeitige Impulse 20 offen und in langen, dazwischenliegenden Zeitspannen 21 geschlossen (langsames Entlüften oder Füllen), und im Falle eines großen Impulstaktverhältnisses, wie in Fig. 2 durch die untere Impulsfolge gezeigt, ist das Ventil für langzeitige Impulse 20' offen und nur in kurzen, dazwischenliegenden Zeitspannen 21' geschlossen (schnelles Entlüften oder Füllen); im Falle eines 100%-igen Impulstaktverhältnisses ist das Ventil ganz offen.

Die Betriebsweise der Steuerung wird an einem solchen System erläutert, bei dem die Kupplungsbetätigungsvorrichtung 12 ein Kupplungspedal ist und das Kupplungspedal elektronisch mit der Steuerung verbunden ist und das Pedal von dem Fahrer betätigt wird.

Das System bildet einen Regelungskreis. Der Kupplungsbetätigungsgeber 7 gibt den Sollwert, der Kupplungsstellungsgeber 6 gibt den Istwert an. Die beiden Signale werden zu dem Differenzbildner 8 geführt. Das Impulstaktverhältnis, auf das die Ventile ansprechen, ist immer der Größe des Differenzsignals proportional. Im Falle, daß die Einrückstellung der Kupplung der Stellung des Kupplungspedals entspricht, beträgt das Impulstaktverhältnis 0%, die Ventile 4, 5 sind geschlossen und die Kupplung behält ihre Stellung bei. Falls der Fahrer das Kupplungspedal bewegt, fühlt die Elektronik aus dem Vorzeichen des Differenzsignals die Bewegungsrichtung des Pedals ab und in Abhängigkeit von dieser Bewegungsrichtung betätigt die Elektronik entweder das Füllventil 4 oder das Entlüftungsventil 5. Bei kleiner oder langsamer Verstellung des Pedals wird ein kleines Differenzsignal gebildet, das Entlüften und Einrücken bzw. Füllen und Ausrücken erfolgt langsam (das feinfühlige Einrücken oder Ausrücken der Kupplung). Bei großer oder schneller Verstellung des Pedals wird ein großes Differenzsignal gebildet, das Entlüften und Einrücken bzw. Füllen und Ausrücken erfolgt schnell (das schnelle Einrücken oder Ausrücken der Kupplung). Das Einmrücken oder Ausrücken der Kupplung entspricht immer der Position bzw. Bewegung des Pedals und kann mit dem Anhalten des Pedals irgendwo abgestoppt werden.

Die Steuerung weist auch einen automatischen Verschleißnachsteller auf. Infolge der Abnutzung der Reibbeläge kommt die voll eingerückte Position der Kupplung in unterschiedlichen Positionen des Kolbens zustande. Diese Position kann mit einem gesonderten Fühler oder mit dem Positionsfühler des Arbeitszylinders 2 bestimmt werden. Im letzteren Fall muß der zu der vollen Einrückposition gehörende Signalpegel (am Ende des Entlüftungsvorgangs) bis zu dem nächsten Kupplungsbetätigungsvorgang als Inkrement im Vergleich mit einem gespeicherten Anfangspositionswertes, der die voole Einrückposition bei neuen, unverschlissenen Reibbelägen angibt, oder als Absolutwert gespeichert werden. Durch Hinzufügen (Addieren) des den Verschleißweg angebenden Verschleißsignals zu dem Sollwertsignal kann erreicht werden, daß der Ausrückwert der Kupplung 1 immer dem ursprünglich eingestellten Wert entspricht. Umgekehrt kann man den Wert des Verschleißsignals auch von dem Istsignal abziehen (subtrahieren).

Der Arbeitszylinder kann einfach an irgendeine das Kupplungsbetätigungsverfahren verwirklichende Vorrichtung angepaßt werden, wenn deren Kupplungsbetätigungsausgang mit dem Eingang des Kupplungsbetätigungssignalgebers verbunden ist.

**Patentansprüche**

1. Steuerung einer pneumatisch betätigten Reibungskupplung eines Kraftfahrzeugs, mit einem pneumatischen Arbeitszylinder (2), von dessen Kolben (3) die Reibungskupplung (1) betätigt wird und dessen Arbeitsraum wahlweise über ein elektropneumatisches Füllventil (5) mit einer pneumatischen Druckquelle, oder über ein elektropneumatisches Entlüftungsventil (4) mit der Umgebung verbindbar ist, wobei die Ventile in Abhängigkeit von der Stellung einer Kupplungsbetätigungsvorrichtung (12) gesteuert sind, dadurch gekennzeichnet, daß die Durchsätze des Füllventils (5) und des Entlüftungsventils (4) proportional zu der Differenz aus dem Wert eines die Stellung der Kupplungsbetätigungsvorrichtung (12) angebenden Sollwertsignals für die Stellung des Kolbens (3) des Arbeitszylinders (2) und dem Wert eines die Ist-Stellung des Kolbens (3) angebenden Istwertsignals gesteuert sind.

2. Steuerung nach Anspruch 1, bei welcher das Füllventil (5) und das Entlüftungsventil (4) impulsbetrieben sind und mittels in ihrer Impulsbreite proportional zu dem jeweiligen Wert der Differenz aus dem Sollwertsignal und dem Istwertsignal modulierten Steuerimpulsen konstanter Impulsfrequenz gesteuert sind.

3. Steuerung nach Anspruch 1 oder 2, bei welcher mittels des die Kolbenstellung abtastenden Fühlers oder eines gesonderten Fühlers die in Abhängigkeit vom Verschleiß der Reibbeläge veränderliche vollständige Einrückstellung der Kupplung abtastbar ist und der Wert des zu dieser jeweiligen vollständigen Einrückstellung gehörenden Signals zur Korrektur des Sollwertsignals für den jeweils nächstfolgenden Steuervorgang speicherbar ist.

Fig. 1

Fig. 2

Europäisches
Patentamt

# EUROPÄISCHER RECHERCHENBERICHT

Nummer der Anmeldung

**EP 91 10 8188**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | WO-A-8 810 376   (ZAHNRADFABRIK FRIEDRICHSHAFEN) * Anspruch 1 * * Seite 2, Zeilen 6 - 19 * * Seite 2, Zeile 33 - Seite 3, Zeile 8 * * Seite 7, Zeilen 12 - 30; Figuren 1-3 * --- | 1-3 | F 16 D 25/14 |
| Y | EP-A-0 259 634   (ROBERT BOSCH) * Spalte 1, Zeilen 7 - 17 * * Spalte 2, Zeilen 9 - 18 * * Spalte 4, Zeilen 7 - 30 * * Figur 1 * --- | 1,2 | |
| Y | EP-A-0 183 094   (RENAULT AGRICULTURE) * Seite 1, Zeile 18 - Seite 2, Zeile 12 * * Figur 1 * --- | 1,2 | |
| A | US-A-4 116 321   (MILLER) * Zusammenfassung * * Figuren 1, 5-7 * --- | 1,2 | |
| A | US-A-4 629 045   (KASAI ET AL.) * Spalte 1, Zeile 59 - Spalte 10, Zeile 14 * * Spalte 3, Zeile 44 - Spalte 5, Zeile 7 * * Figuren 3, 5, 6a, 6b * ----- | 1,3 | |
| | | | **RECHERCHIERTE SACHGEBIETE (Int. Cl.5)** |
| | | | F 16 D B 60 K |

Der vorliegende Recherchenbericht wurde für alle Patentansprüche erstellt

| Recherchenort | Abschlußdatum der Recherche | Prüfer |
|---|---|---|
| Den Haag | 27 August 91 | CLASEN M.P. |